# EUROPÄISCHE PATENTSCHRIFT

(11) **EP 0 383 279 B1**
(45) Veröffentlichungstag und Bekanntmachung des Hinweises auf die Patenterteilung: **27.04.1994**
(21) Anmeldenummer: 90102827.4
(22) Anmeldetag: 13.02.1990
(51) Int. Cl.: B62D 49/08

(54) **Schlepper, insbesondere für landwirtschaftlichen Einsatz Stichwort: Verschiebbares Gegengewicht**
Tractor with slidable counterweights, especially for agricultural use
Tracteur à contrepoids coulissants, notamment pour usage agricole

(30) Priorität: 13.02.1989 DE 3904227
(43) Veröffentlichungstag der Anmeldung: 22.08.1990
(73) Patentinhaber: ANTON SCHLÜTER MÜNCHEN GMBH & CO., D-85354 Freising (DE)
(72) Erfinder: Leutner, Siegfried, D-8050 Freising (DE)
(74) Vertreter: Weickmann, Heinrich, Dipl.-Ing.

(56) Entgegenhaltungen:
- EP-A- 0 012 236
- DE-A- 3 000 696
- DE-A- 3 223 990
- DE-A- 3 501 686

## Beschreibung

Die Erfindung betrifft einen Schleppe, bausatz gemäß dem. Oberbegriff des Patentanspruchs 1.

Ein landwirtschaftlicher Schlepper dieser Bauart ist aus der DE-A-30 00 696 bekannt. Bei dieser bekannten Bauart ist die Gegengewichtsanordnung von einer Mehrzahl winkelplattenförmiger Ballastgewichte gebildet, die in Fahrtrichtung des Schleppers hintereinander angeordnet und zwischen einem in Fahrtrichtung des Schleppers vorderen Abschlußbock sowie einer in Fahrtrichtung weiter hinten liegenden Pratze eingespannt sind. Die Pratze ist dabei in Längsrichtung des Schleppers verstellbar, damit je nach der Größe der gewünschten Ballastierung die Zahl der Ballastgewichte verändert werden kann.

Bei dieser bekannten Ausführungsform ist zwar durch die Unterteilung der Gegengewichtsanordnung in eine Mehrzahl von Ballastgewichten erreicht, daß die Ballastwirkung unter Vergrößerung oder Verkleinerung der jeweils eingesetzten Zahl von Ballastgewichten in bezug auf die Vorderachse verändert werden kann, die Veränderung der Ballastierung ist aber ergonomisch unzweckmäßig, weil einzelne Ballastgewichte zur Veränderung der Gesamtballastierung von Hand angehoben und eingebaut oder entnommen werden müssen.

Der Erfindung liegt die Aufgabe zugrunde, einen gattungsgemäßen Schlepper unter Beibehaltung des Vorteils einer den jeweiligen Arbeitsbedingungen anpaßbaren Lastverteilung derart auszubilden, daß der Arbeitsaufwand zur Anpassung der Lastverteilung minimiert wird und daß ggf. - bei nicht bestehendem Bedarf für ein Gegengewicht - der Einsatzbereich des Schleppers durch die Aufnahmemöglichkeit verschiedener Anbaugeräte bzw. Aufbauteile auf dessen Fahrgestell erweitert wird. Dabei ist anzumerken, daß unter Umständen das Anbaugerät oder ein Aufbauteil die Funktion des Gegengewichts ganz oder teilweise übernehmen kann.

Zur Lösung dieser Aufgabe wird erfindungsgemäß vorgeschlagen, daß die Gegengewichtsanordnung aus einem Gegengewicht besteht, welches mittels eines Kraftgeräts längs einer sich in Fahrtrichtung erstreckenden Schiebeführung verschiebbar gelagert ist, und daß das Anbaugerät zur Aufnahme in der Schiebeführung und zur Koppelung mit dem Kraftgerät ausgebildet ist.

Durch die Möglichkeit, das Gegengewicht mittels eines Kraftgeräts längs der sich in Fahrtrichtung erstreckenden Schiebeführung zu verschieben, wird es für den Traktorfahrer äußerst einfach, die Ballastierungswirkung des Gegengewichts zu verändern und auf die einzelnen Achsen des Schleppers zu verteilen.

Mit dem Kraftgerät kann überdies bei ersatzweisem Anbau eines Anbaugeräts oder eines Flüssigkeitstanks dieses auf einfache Weise in eine für die jeweils durchzuführenden Arbeiten optimale Lage eingestellt werden.

Aus der europäischen Offenlegungsschrift EP-A-0012236 ist ein Baustellenfahrzeug mit auswechselbaren Anbaugeräten wie Baggern und Ladeschaufeln bekannt. Bei diesem Baustellenfahrzeug ist in dem Bereich vor der Führerplatzbaugruppe eine Aussparung bereitgestellt, innerhalb welcher ein eine Ladeschaufel tragender Schwenkarm hoch- und niederschwenkbar ist. Demzufolge ist die Gegengewichtsanordnung nicht in dem Bereich vor der Führerplatzbaugruppe angeordnet, sondern seitlich über den Rädern. Um eine symmetrische Ballastierung in bezug auf eine vertikale Längssymmetrieebene zu ermöglichen, ist es dabei notwendig, über mindestens zwei zusammengehörigen Rädern je eine Schiebeführung vorzusehen, was den Bauaufwand erheblich vergrößert. Dieser Bauaufwand wird noch größer, wenn die einzelnen Gegengewichte durch eine entsprechende Anzahl von Kraftgeräten verstellt werden sollen. Demgemäß ist die Möglichkeit vorgesehen, die Gegengewichte durch Schrägstellen des Fahrzeugrahmens unter Schwerkrafteinsatz zu verlagern. Dies erfordert aber den Einsatz entsprechender Anbaugeräte, die in der Lage sind, durch Abstützung auf der Fahrfläche und anschließende Höhenverstellung gegenüber dem Fahrzeugrahmen eine Schrägstellung des Fahrzeugrahmens zu bewirken. Selbst dann, wenn man von dieser Möglichkeit Gebrauch machen kann, ist die Verlagerung der Gegengewichte noch unbefriedigend, da diese nur in anschlagbestimmte Stellungen eingestellt werden können und nicht kontinuierlich an den jeweiligen Ballastierungsbedarf angepaßt werden können. Hinzu kommt, daß bei Fehlen von Kraftgeräten die Feststellung der Gegengewichte besonderer Maßnahmen bedarf, z. B. durch Anbringen von Feststellschrauben. Dadurch, daß die Gegengewichte jeweils nur über dem Radbereich angeordnet sind, ist auch die Möglichkeit, weitere Anbaugeräte oder auch Flüssigkeitstanks üblichen Volumens anstelle der Gegengewichte anzubringen, verbaut.

Die Schiebeführung kann gemäß einer bevorzugten Ausführungsform des erfindungsgemäßen Schlepperbausatzes annähernd auf Fußbodenhöhe der Führerplatzbaugruppe angeordnet sein, so dass das Gegengewicht etwa in Höhe der Unterschenkel des Schlepperführers sich befindet, wenn der Schlepperführer auf einem Führersitz sitzt und seine Füße auf dem Fußboden der Führerplatzbaugruppe aufruhen. Damit ist gewährleistet, dass durch das Gegengewicht, gleichgültig welche Stellung längs der Schiebeführung es einnimmt, die Sicht des Schlepperführers nach vorne und unten möglichst wenig behindert wird.

Das Antriebsaggregat kann bei der erfindungsgemässen Ausführungsform, wie an sich bekannt, unterhalb der Führerplatzbaugruppe zwischen zwei Achsbaugruppen angeordnet sein.

Wie ebenfalls an sich bekannt, kann in Fahrtrichtung hinter der Führerplatzbaugruppe mindestens eine Anbaueinrichtung für Arbeitsgeräte vorgesehen sein.

Wenn also zum Beispiel an der Rückseite des Schleppers ein Pflug aufgehängt ist, der ein Kippmoment um die Hinterachse im Sinne einer Anhebung der Vorderachse erzeugt, so kann dieses Kippmoment durch entsprechende Einstellung des Gegengewichts längs der Schiebeführung kompensiert werden, etwa dahin, dass auf beiden Achsbaugruppen annähernd die gleiche Last ruht. Dies ist besonders bei vierradgetriebenen Schleppern von Bedeutung, damit beide Achsbaugruppen das Antriebsmoment der jeweiligen Räder gleichmässig auf das Gelände übertragen können. Ändert sich das auf den Schlepper um die Hinterachse wirkende Kippmoment etwa bei beginnendem Eingriff des Pflugs in das zu kultivierende Gelände oder ändert sich dieses Kippmoment wegen Änderung der Bodenverhältnisse, so kann die Kompensation des Kippmoments durch entsprechende Verstellung des Gegengewichts nachkorrigiert werden.

Bevorzugt wird als Kraftgerät, ein Hydraulikzylinder verwendet. Der Schlepperführer entwickelt nach einiger Übung ein sicheres Gefühl für die richtige Einstellung des Gegengewichts und kann dies dann von seinem Führersitz aus durch entsprechende Ansteuerung des Kraftgerätes nachkorrigieren, beispielsweise aufgrund der ihm leicht erkennbaren Einstellung des Schleppers um die Hinterachse, beispielsweise aber auch aufgrund der Wahrnehmung von Schlupf an den Rädern der einen oder anderen Achsbaugruppe.

Darüber hinaus ist es möglich, dass das Kraftgerät in Abhängigkeit von der jeweiligen Ist-Belastung der Achsbaugruppen auf eine gewünschte Belastungsverteilung auf die Achsbaugruppen hin regelbar ist. Die Ist-Belastung der Achsbaugruppen lässt sich leicht durch Kraftmessgeräte bestimmen, die etwa zwischen dem Rahmen und den Achsbaugruppen eingebaut werden können. Aufgrund der an solchen Kraftmessgeräten gemessenen Ist-Lastverteilung lässt sich dann mittels eines einfachen Rechners die notwendige Richtung und der notwendige Weg der Verschiebung des Gegengewichts zur Herstellung der gewünschten Belastungsverteilung ermitteln.

Daneben kann die Regelung der Gegengewichtseinstellung beispielsweise auch von etwaigem Schlupf an den Rädern der Achsbaugruppen abhängig gemacht werden, dahingehend, dass der Schlupf vollständig unterdrückt oder die Schlupfverteilung vergleichmässigt wird. Der Schlepperführer kann im Falle eines Steckenbleibens des Schleppers im schwierigen Gelände auch versuchen, durch Hin- und Herfahren des Gegengewichts und damit wechselnde Lastverteilung auf die Achsbaugruppen den Schlepper nach Gefühl wieder aus der Situation des Steckenbleibens herauszumanovrieren.

Eine konstruktiv einfache Lösung für die bewegliche Lagerung des Gegengewichts besteht darin, dass die Schiebeführung von zwei parallel zueinander in Fahrtrichtung angeordneten U-Schienen gebildet ist, welche mit ihren offenen Seiten einander zugekehrt sind und dass an dem Gegengewicht bzw. dem Anbaugerät Führungsrollen zum Eingriff in die U-Schienen angebracht sind.

Die Schiebeführung des Gegengewichts kann nach Abnahme des Gegengewichts beispielsweise zur Aufnahme eines Frontladers oder eines Gabelstaplers benutzt werden. Es besteht deshalb das Problem, das Gegengewicht auf einfache Weise auch durch ein schweres Anbaugerät ersetzen zu können und umgekehrt. Hierzu ist es vorteilhaft, dass an dem Gegengewicht bzw. dem Anbaugerät für jede U-Schiene jeweils mindestens drei Führungsrollen in Fahrtrichtung beabstandet angeordnet sind derart, dass das Gegengewicht bzw. das Anbaugerät mit den vordersten Führungsrollen aus der Schiebeführung des Schleppers ausfahrbar ist, ohne dass das Gegengewicht bzw.das Anbaugerät seine stabile Halterung in der Schiebeführung verliert. Bei dieser Ausbildung besteht die Möglichkeit, das Gegengewicht bzw. das Anbaugerät in einer Abstelleinrichtung abzustellen. Eine solche Abstelleinrichtung kann etwa gebildet sein von einem Ständer und einer der Schiebeführung des Schleppers angepassten Aufnahmeführung, welche in Flucht zu der Schiebeführung des Schleppers einstellbar ist. Ist diese Flucht einmal hergestellt, so kann man das Gegengewicht bzw. das Anbaugerät zwischen dem Schlepper und der Abstelleinrichtung hin- und herschieben, wobei dank der Dreirollenausführung ein Abkippen in jedem Falle vermieden ist. Ein solches Abstellgerät kann von beiden Enden her benutzbar sein, so dass man etwa an einem Ende jeweils das Gegengewicht und an dem anderen Ende das Anbaugerät bereitstellt. Bei mehreren Anbaugeräten benötigt man eine entsprechende Mehrzahl von Abstelleinrichtungen, sofern man nicht ein Hebezeug zur Verfügung hat, um wahlweise verschiedene Anbaugeräte in die Abstelleinrichtung einfädeln zu können.

Bringt man auf der Schiebeführung ein Anbaugerät an, so kann natürlich auch dieses in verschiedene Positionen längs der Schiebeführung eingestellt werden. Auf diese Weise lässt sich die Ausladung beispielsweise eines Anbaubaggers verändern. Es lässt sich aber auch hier wieder die Achslastverteilung optimieren.

Das Kraftgerät lässt sich mit dem erforderlichen Hub leicht auf der Höhe der U-Schienen zwischen diesen unterbringen. Dabei empfiehlt es sich, dass das Kraftgerät mit einem in Fahrtrichtung rückwärtigen Ende an dem Rahmen und mit einem in Fahrtrichtung vorderen Ende an dem Gegengewicht bzw. Arbeitsgerät angekuppelt ist. Der Grund für diese Massnahme ist der, dass das Kraftgerät dann von dem Gegengewicht bzw. Anbaugerät betriebsmässig leicht abkuppelbar ist, während der Schlepperführer am vorderen Ende des Schlepperrahmens steht und von dort aus zu einer Kupplung am vorderen Ende des Kraftgeräts einen guten Zugang hat.

Es wird weiter empfohlen, ein Auflager für das Kraftgerät vorzusehen, welches das Kraftgerät im abgekuppelten Zustand in Einkupplungsbereitschaft hält, beispielsweise auch während der Fahrt des Schleppers ohne Gegengewicht und ohne Anbaugerät.

Die Schiebeführung kann auch zur Aufnahme von grossvolumigen Lasten benutzt werden, z.B. Flussigkeitstanks. In diesem Falle wird die Sicht vom Führerstand aus in Fahrtrichtung nach vorne behindert. Dies ist aber dann kein Problem, wenn, wie an sich bekannt, die Führerplatzbaugruppe um eine vertikale Achse um 180 Grad schwenkbar angeordnet ist. Dann kann die Vorwärtsfahrtrichtung gegen die Rückwärtsfahrtrichtung einfach vertauscht werden.

Es ist grundsätzlich denkbar, vor und hinter der Führerplatzbaugruppe eine Schiebeführung anzubringen.

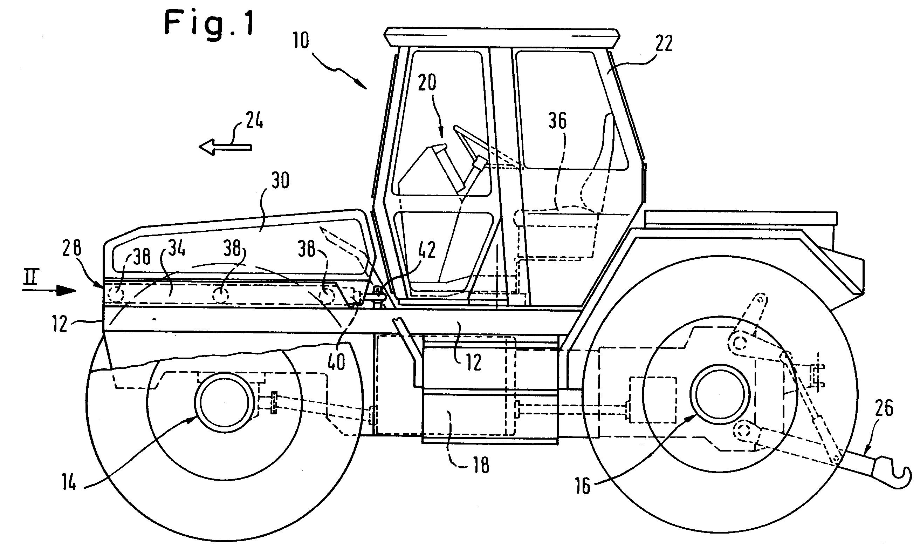

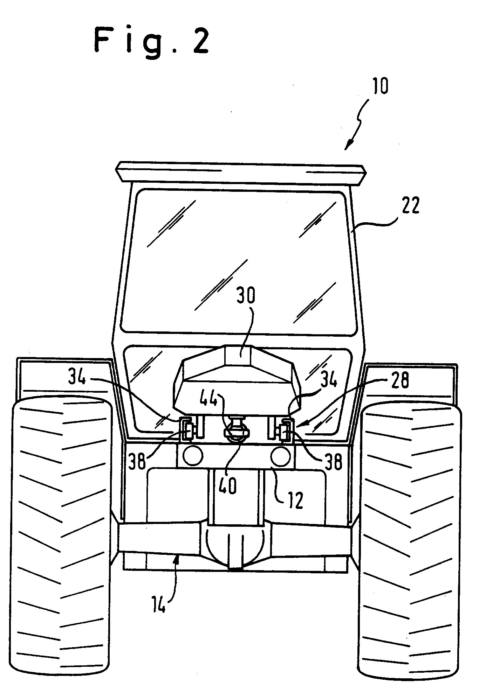

Die beiliegenden Figuren erläutern die Erfindung anhand eines Ausführungsbeispiels. Es stellen dar:
Figur 1
   einen Schlepper eines erfindungsgemässen Schlepper bausatzes in Seitenansicht;
Figur 2
   einen Schlepper in Vorderansicht gemäss Pfeilrichtung II der Figur 1;
Figur 3
   eine Draufsicht auf den Schlepper gemäss Figuren 1 und 2;
Figur 4
   eine Seitenansicht entsprechend Figur 1 mit verschobenem Gegengewicht und angebautem Pflug;
Figur 5
   eine Seitenansicht entsprechend Figur 1 nach Austausch des Gegengewichts durch einen Bagger;
Figur 6
   eine Seitenansicht entsprechend Figur 1 nach Austausch des Gegengewichts durch einen Flüssigkeitstank und 180 Grad Wendung der Führerplatzbaugruppe;
Figur 7
   eine Seitenansicht gemäss Figur 1 bei dem Überführen des Gegengewichts zwischen dem Schlepper und einer Abstelleinrichtung und
Figur 8
   das Schema einer Regelung des Gegengewichts in Abhängigkeit von der Achslastverteilung.

In Figur 1 ist ein Schlepper ganz allgemein mit 10 bezeichnet. Dieser Schlepper weist einen Rahmen 12 und zwei Achsbaugruppen 14,16 auf. Zwischen den beiden Achsbaugruppen 14,16 ist an der Unterseite des Rahmens 12 ein Unterflurantriebsaggregat 18 angebracht, welches die Räder beider Achsbaugruppen antreibt. Oberhalb des Unterflurantriebsaggregats ist eine Führerplatzbaugruppe 20 auf dem Rahmen 12 angeordnet, die mit einer Kabine 22 kombiniert ist. Die normale Vorwärtsrichtung ist durch einen Pfeil 24 angedeutet. Am rückwärtigen Ende des Schleppers ist beispielsweise zur Anbringung des Pfluges eine übliche Dreipunktaufhängung 26 angeordnet. In Fahrtrichtung vor der Kabine 22 ist auf dem Rahmen eine Schiebeführung 28 für ein Gegengewicht 30 angebracht. Die Schiebeführung 28 ist, wie aus Figur 2 zu ersehen, von zwei U-Schienen 34 gebildet, die sich knapp oberhalb des Rahmens 12 befinden und damit annähernd auf Fußhöhe des Schlepperführers, wenn dieser auf einem Sitz 36 sitzt. Das Gegengewicht 30 ist in den U-Schienen 34 jeweils durch drei annähernd gleichbeabstandete Rollen 38 geführt.

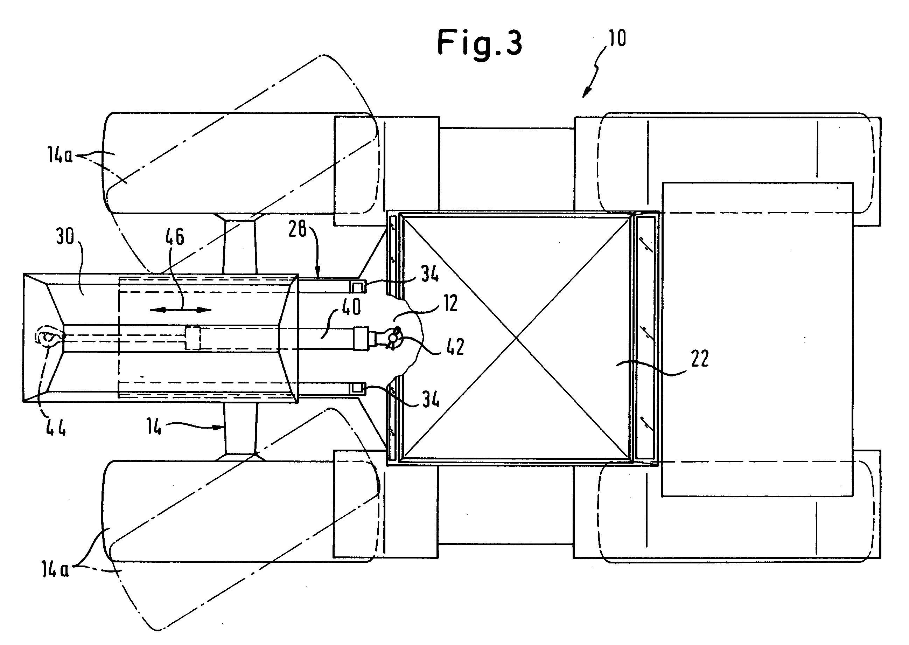

Zur Verschiebung des Gegengewichts dient ein hydraulisches Kraftgerät 40, welches bei 42 (Figur 3) an dem Rahmen 12 angekuppelt ist und durch eine lösbare Kupplung 44 mit dem vorderen Ende des Gegengewichts 30 lösbar verbunden ist (Figur 3). Das Kraftgerät 40 hängt an dem ohnehin vorhandenen hydraulischen Kreislauf des Schleppers und ist von einem Schalter oder einem Stellorgan in der Kabine aus steuerbar. Auf diese Weise kann die Stellung des Gegengewichts in Pfeilrichtung 46 der Figur 3 verändert werden.

Figur 3 lässt weiter erkennen, dass dank der schmalen Bauweise des Gegengewichts 30 ein sehr grosser Einschlagwinkel der Räder 14a der vorderen Achsbaugruppe 14 möglich ist.

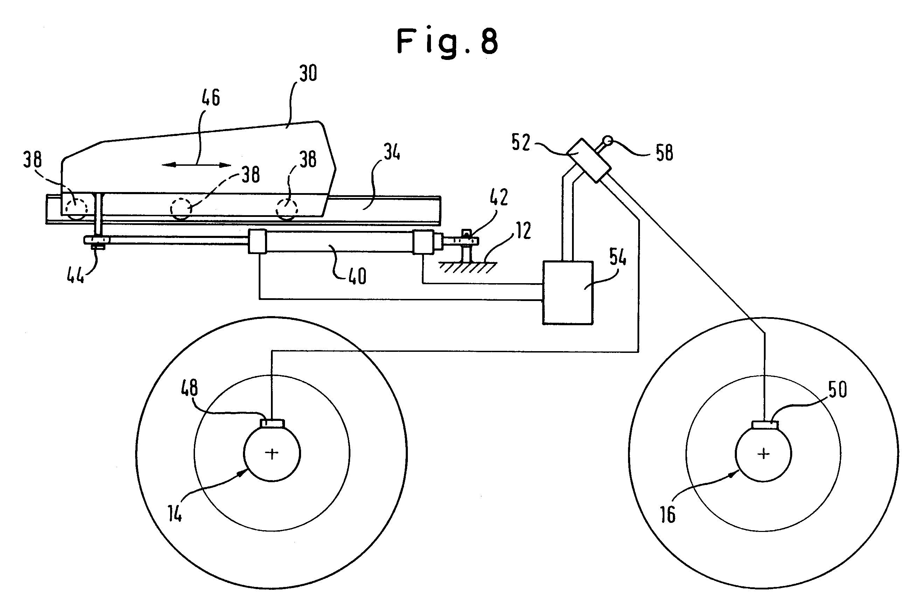

In Figur 8 ist eine Steuerung des Kraftgerätes 40 schematisch angedeutet. Zwischen dem Rahmen 12 und den beiden Achsbaugruppen 14,16 ist je ein Kraftmessgerät 48 bzw. 50 vorgesehen, welches die Grösse der Istlast auf der jeweiligen Achsbaugruppe ermittelt. Die ermittelten Werte werden einem Rechner 52 zugeführt. Dieser Rechner 52 steuert einen hydraulischen Verteilerblock 54, der den Zufluss zu den beiden Enden des Kraftgerätes 40 bestimmt. Der Rechner kann beispielsweise so programmiert sein, dass das Gegengewicht 30 stets in diejenige Stellung eingefahren wird, in welcher die Achslast an beiden Achsbaugruppen 14,16 gleich gross ist. Die automatische Steuerung kann durch eine Handsteuerung mittels eines Handsteuerhebels 58 ersetzt werden.

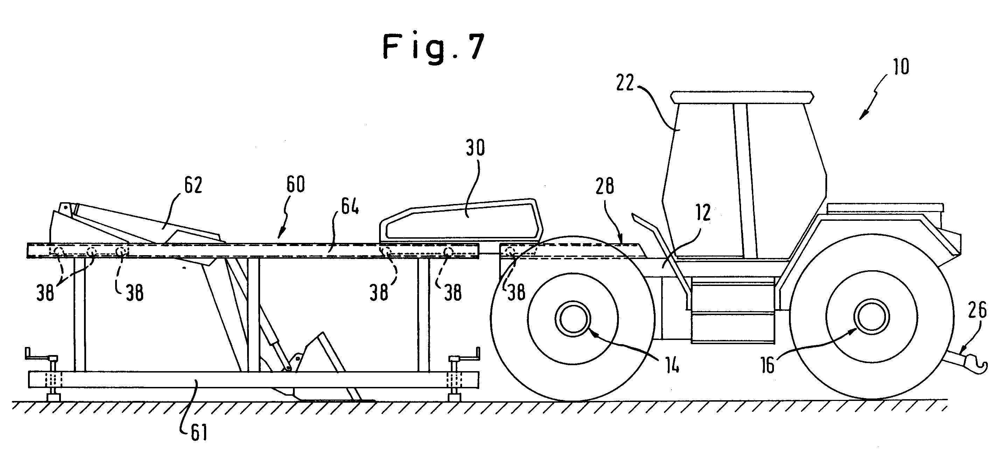

Zum Abnehmen des Gegengewichts 30 wird der Schlepper 10 gemäss Figur 7 in Fluchtstellung mit einer Abstelleinrichtung 60 gebracht. Diese Abstelleinrichtung 60 umfasst ein höhenverstellbares Untergestell 61 und eine Aufnahmeführung 64, welche profilgleich mit der Schiebeführung 28 ist. Nach Einstellung der Flucht von Schiebeführung 28 und Aufnahmeführung 64 kann das Gegengewicht 30 zwischen dem Schlepper 10 und der Abstelleinrichtung 60 hin- und hergeschoben werden, wie in Figur 7 dargestellt. Dabei sorgen die drei in Pfeilrichtung hintereinander eingeordneten Rollenpaare 38 dafür, dass ein Abkippen des Gegengewichts nicht stattfinden kann. Figur 7 lässt weiter ein Anbaugerät 62 in Form eines Baggers erkennen, welches ebenfalls in dem Abstellgerät 60 abgestellt ist und von dem Schlepper übernommen werden kann, wenn dieser nach Abnahme des Gegengewichts an das andere Ende der Abstelleinrichtung 60 herangefahren worden ist.

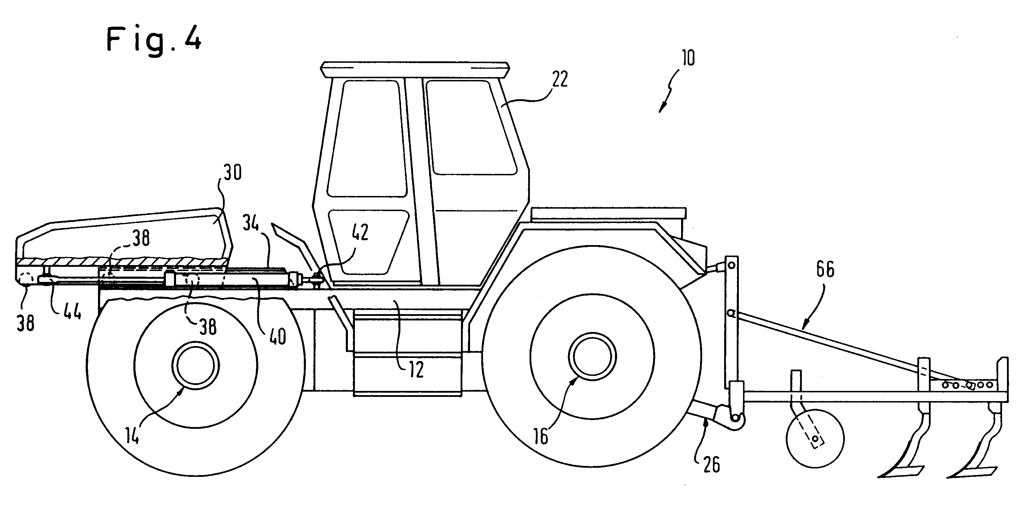

In Figur 4 erkennt man den Schlepper 10 mit einem Anbaupflug 66 an der Dreipunktaufhängung 26. Das Gegengewicht ist so eingestellt, dass auf beiden Achsgruppen gleiche Lasten liegen.

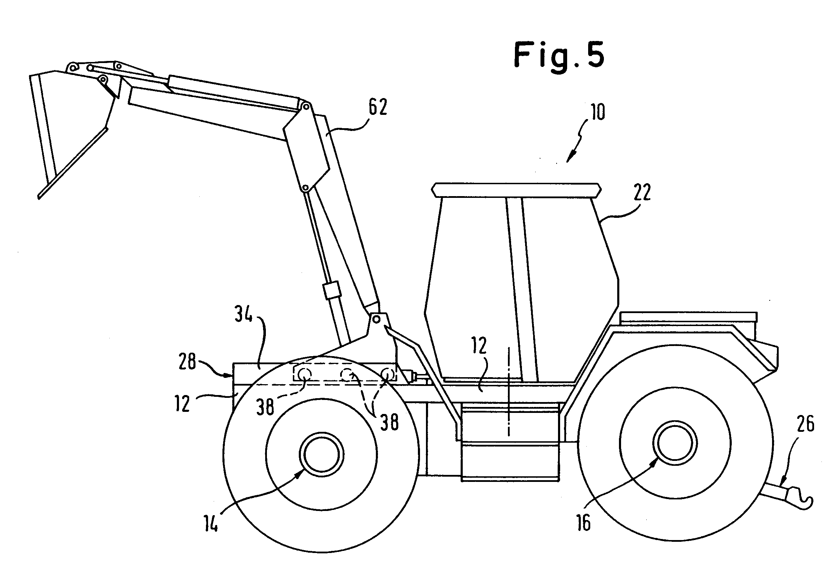

In Figur 5 ist das Gegengewicht abgebaut und durch den Bagger 62 gemäss Figur 7 ersetzt. Der Bagger 62 kann zur Veränderung der Ausladung und/oder zur Veränderung der Achslastverteilung wiederum in der Schiebeführung 28 verschoben und verriegelt werden. Die Verriegelung kann rein hydraulisch sein. Zur Sicherheit können aber zusätzliche mechanische Verriegelungsmittel vorgesehen sein. Beim Austausch des Gegengewichts 30 durch ein Anbaugerät 62 wird die Kupplung 44 gelöst. Um das Kraftgerät 40 dann annähernd in seiner alten Stellung zu belassen und zu sichern, sind im einzelnen nicht dargestellte Ablege- und Sicherungsmittel für das Kraftgerät 40 vorgesehen.

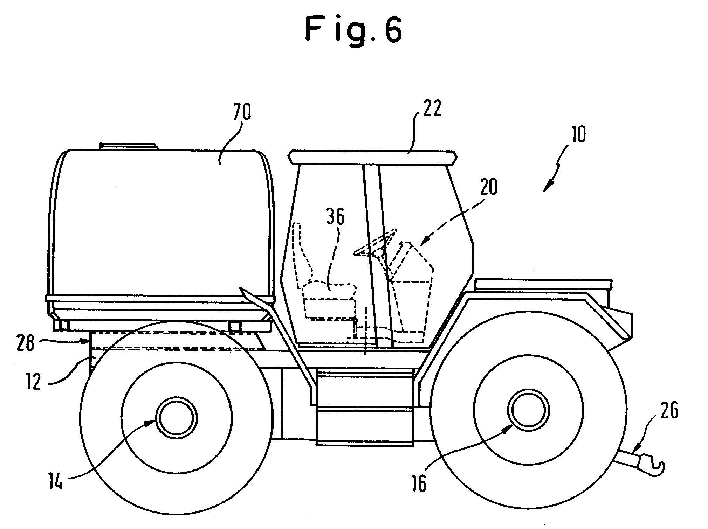

In Figur 6 ist das Gegengewicht durch einen grossvolumigen Flüssigkeitstank 70 ersetzt. Die Führerplatzanordnung 20 ist um 180 Grad gedreht, so dass der Schlepperführer nunmehr entgegen der allgemeinen Vorwärtsfahrtrichtung fahren kann und damit wieder die Sicht in Fahrtrichtung nach vorne hat.

## Patentansprüche

1. Schlepperbausatz, insbesondere für landwirtschaftlichen Einsatz, mit einem Schlepper als Grundgerät und mindestens einem Anbaugerät, dieser Schlepper umfassend einen Schlepperrahmen (12), an diesem Schlepperrahmen angeordnete Achsbaugruppen (14,16), eine Führerplatzbaugruppe (20) auf dem Rahmen (12) und ein Antriebsaggregat (18) zum Antrieb mindestens einer Achsbaugruppe (14,16), wobei in einem Bereich auf dem Rahmen (12) zwischer den Rädern (14a) und in Fahrtrichtung vor der Führerplatzbaugruppe (20) eine variable Gegengewichtsanordnung (30) anbringbar ist,
dadurch gekennzeichnet,
daß die Gegengewichtsanordnung ein Gegengewicht (30) umfaßt, welches mittels eines Kraftgeräts (40) längs einer sich in Fahrtrichtung erstreckenden Schiebeführung (28) verschiebbar gelagert ist, und daß das Anbaugerät (62,70) zur Aufnahme in der Schiebeführung (28) und zur Koppelung mit dem Kraftgerät (40) ausgebildet ist.

2. Schlepper bausatz nach Anspruch 1,
dadurch gekennzeichnet,
dass die Schiebeführung (28) annähernd auf Fußbodenhöhe der Führerplatzbaugruppe (20) angeordnet ist.

3. Schlepper bausatz nach Anspruch 1 oder 2,
dadurch gekennzeichnet,
dass das Antriebsaggregat (18) als Unterflurantriebsaggregat unterhalb der Führerplatzbaugruppe (20) zwischen zwei Achsbaugruppen (14,16) angeordnet ist.

4. Schlepper bausatz nach einem der Ansprüche 1 bis 3,
dadurch gekennzeichnet,
dass auch in Fahrtrichtung hinter der Führerplatzbaugruppe (20) mindestens eine Anbaueinrichtung (26) für Arbeitsgeräte (66) vorgesehen ist.

5. Schlepper bausatz nach einem der Ansprüche 1 bis 4,
dadurch gekennzeichnet, daß das
Kraftgerät (40) ein Hydraulikzylinder (40) ist.

6. Schlepper bausatz nach einem der Ansprüche 1 bis 5,
dadurch gekennzeichnet,
dass das Kraftgerät (40) von der Führerplatzbaugruppe (20) aus manuell steuerbar ist.

7. Schlepper bausatz nach einem der Ansprüche 1 bis 6,
dadurch gekennzeichnet,
dass das Kraftgerät (40) in Abhängigkeit von der jeweiligen Ist-Belastung der Achsbaugruppen (14,16) auf eine gewünschte Belastungsverteilung auf die Achsbaugruppen (14, 16) hin regelbar ist.

8. Schlepper bausatz nach einem der Ansprüche 1 bis 7,
dadurch gekennzeichnet,
dass das Kraftgerät (40) in Abhängigkeit von etwaigem Schlupf an den Rädern der Achsbaugruppen (14,16) auf Schlupfunterdrückung bzw. eine gewünschte Schlupfverteilung hin regelbar ist.

9. Schlepper bausatz nach einem der Ansprüche 1 bis 8,
dadurch gekennzeichnet,
dass die Schiebeführung (28) von zwei parallel zueinander in Fahrtrichtung angeordneten U-Schienen (34) gebildet ist, welche mit ihren offenen Seiten einander zugekehrt sind und dass an dem Gegengewicht (30) bzw. dem Anbaugerät (62,70) Führungsrollen (38) zum Eingriff in die U-Schienen (34) angebracht sind.

10. Schlepper bausatz nach Anspruch 9,
dadurch gekennzeichnet,
dass an dem Gegengewicht (30) bzw. dem Anbaugerät (62,70) für jede U-Schiene (34) jeweils mindestens drei Führungsrollen (38) in Fahrtrichtung beabstandet angeordnet sind derart, dass das Gegengewicht (30) bzw. Anbaugerät (62,70) mit den vordersten Führungsrollen (38) aus der Schiebeführung (28) des Schleppers (10) ausfahrbar ist, ohne dass das Gegengewicht (30) bzw. Anbaugerät (62,70) seine stabile Halterung in der Schiebeführung verliert.

11. Schlepper bausatz nach einem der Ansprüche 9 bis 10,
dadurch gekennzeichnet,
dass das Kraftgerät (40) auf der Höhe der U-Schienen (34) zwischen diesen angeordnet ist.

12. Schlepper bausatz nach einem der Ansprüche 1 bis 11,
dadurch gekennzeichnet,
dass das Kraftgerät (40) mit einem in Fahrtrichtung rückwärtigen Ende an dem Rahmen (bei 42) und mit einem in Fahrtrichtung vorderen Ende an dem Gegengewicht bzw. Anbaugerät (62,70) angekuppelt ist, insbesondere an dessen vorderem Ende.

13. Schlepper bausatz nach einem der Ansprüche 1 bis 12,
dadurch gekennzeichnet,
dass das Kraftgerät (40) von dem, Gegengewicht (30) bzw. Anbaugerät (62,70) betriebsmässig abkuppelbar ist und dass ein Auflager für das Kraftgerät (40) vorgesehen ist, welches das Kraftgerät (40) im abgekuppelten Zustand in Einkupplungsbereitschaft hält.

14. Schlepper bausatz nach einem der Ansprüche 1 bis 13,
dadurch gekennzeichnet,
dass die Führerplatzbaugruppe (20) um eine vertikale Achse um 180 Grad schwenkbar angeordnet ist.

15. Schlepperbausatz, weiter umfassend eine Abstelleinrichtung für das Gegengewicht und/oder ein Anbaugerät nach einem der Ansprüche 1 bis 14,
gekennzeichnet durch einen Ständer (61) und eine der Schiebeführung (28) des Schleppers (10) angepasste Aufnahmeführung (64), welche in Flucht zu der Schiebeführung (28) des Schleppers einstellbar ist und nach Einstellung der Flucht eine Überführung des Gegengewichts (30) bzw. des Anbaugeräts (62,70) von dem Schlepper (10) auf die Abstelleinrichtung (60) gestattet.

16. Schlepperbausatz nach Anspruch 15
dadurch gekennzeichnet, daß die Abstelleinrichtung (60) von zwei Enden her beschickbar ist.

## Claims

1. Tractor assembly, especially for agricultural use, comprising a tractor as basic unit and at least one attachment unit, this tractor comprising a tractor chassis (12), axle sub-assemblies (14, 16) mounted on this tractor chassis, a driver's position unit (20) on the chassis (12) and a drive unit (18) for driving at least one axle sub-assembly (14, 16), a variable counterweight sub-assembly (30) being mountable in a region on the chassis (12) between the wheels (14a) and ahead of the driver's position unit (20) in the direction of travel, characterized in that the counterweight sub-assembly comprises a counterweight (30), which is mounted slidable by means of a power unit (40) along a slide guide (28) extending in the direction of travel, and that the attachment unit (62, 70) is constructed to be seated in the slide guide (28) and to be coupled to the power unit (40).

2. Tractor assembly according to Claim 1, characterized in that the slide guide (28) is disposed approximately at the level of the floor of the driver's position unit (20).

3. Tractor assembly according to Claim 1 or 2, characterized in that the drive unit (18) is disposed as an underfloor drive unit beneath the driver's position unit (20) between two axle sub-assemblies (14, 16).

4. Tractor assembly according to one of Claims 1 to 3, characterized in that, in the direction of travel behind the driver's position unit (20), at least one attachment device (26) for working tools (66) is also provided.

5. Tractor assembly according to one of Claims 1 to 4, characterized in that the power unit (40) is a hydraulic cylinder (40).

6. Tractor assembly according to one of Claims 1 to 5, characterized in that the power unit (40) can be controlled manually from the driver's position unit (20).

7. Tractor assembly according to one of Claims 1 to 6, characterized in that the power unit (40) can be regulated as a function of the current actual loading of the axle sub-assemblies (14, 16) to a desired load distribution on the axle sub-assemblies (14, 16).

8. Tractor assembly according to one of Claims 1 to 7, characterized in that the power unit (40) can be regulated as a function of any slip at the wheels of the axle sub-assemblies (14, 16) for suppressing slip or for a desired slip distribution.

9. Tractor assembly according to one of Claims 1 to 8, characterized in that the slide guide (28) is formed of two mutually parallel U-section rails (34) disposed in the direction of travel, which face each other with their open sides, and that guide rollers (38) for engagement into the U-section rails (34) are mounted on the counterweight (30) and the attachment unit (62, 70) respectively.

10. Tractor assembly according to Claim 9, characterized in that, on the counterweight (30) and on the attachment unit (62, 70) respectively, at least three guide rollers (38) for each U-section rail (34) are disposed spaced apart in the direction of travel so that the counterweight (30) and attachment unit (62, 70) respectively can be extended with the foremost guide rollers (38) out of the slide guide (28) of the tractor (10), without the counterweight (30) or attachment unit (62, 70) respectively losing its stable hold in the slide guide.

11. Tractor assembly according to one of Claims 9 to 10, characterized in that the power unit (40) is disposed at the level of the U-section rails (34) between them.

12. Tractor assembly according to one of Claims 1 to 11, characterized in that the power unit (40) is coupled at a rearward end in the direction of travel to the chassis (at 42) and at a front end in the direction of travel to the counterweight or attachment unit (62, 70) respectively, especially to the front end of same.

13. Tractor assembly according to one of Claims 1 to 12, characterized in that the power unit (40) can be operatively uncoupled from the counterweight (30) or attachment unit (62, 70) respectively and that a seating for the power unit (40) is provided, which holds the power unit (40), when in the uncoupled state, in coupling readiness.

14. Tractor assembly according to one of Claims 1 to 13, characterized in that the driver's position unit (20) is mounted pivotally about a vertical axis through 180 degrees.

15. Tractor assembly, comprising also a parking device for the counterweight and/or an attachment unit according to one of Claims 1 to 14, characterized by a support frame (61) and a seating guide (64) adapted to the slide guide (28) of the tractor (10), which (seating guide) can be adjusted into alignment with the slide guide (28) of the tractor and, after adjustment of the alignment, makes possible a transfer of the counterweight (30) or attachment unit (62, 70) from the tractor (10) onto the parking device (60).

16. Tractor assembly according to Claim 15, characterized in that the parking device (60) can be fed from either end.

## Revendications

1. Ensemble formant tracteur, destiné en particulier à un usage agricole, comportant un tracteur servant d'appareil de base et au moins un appareil auxiliaire, ce tracteur comprenant un châssis (12) de tracteur, des ensembles formant essieux (14, 16) montés sur ce châssis de tracteur, un poste de conduite (20), sur le châssis (12), et un groupe d'entraînement (18) destiné à entraîner au moins un ensemble formant essieu (14, 16), un dispositif de contrepoids (30) variable pouvant être disposé dans une zone sur le châssis (12), entre les roues (14a), et, vu dans le sens de la marche, devant le poste de conduite (20), caractérisé en ce que le dispositif de contrepoids comprend un contrepoids (30) qui est monté coulissant, au moyen d'un vérin (40), le long d'une glissière (28) s'étendant dans le sens de la marche et en ce que l'appareil auxiliaire (62, 70) est conformé de façon à pouvoir être logé dans la glissière (28) et accouplé au vérin (40).

2. Ensemble formant tracteur selon la revendication 1, caractérisé en ce que la glissière (28) se situe approximativement à la hauteur du plancher du poste de conduite (20).

3. Ensemble formant tracteur selon la revendication 1 ou 2, caractérisé en ce que le groupe d' entraînement (18), conformé en groupe d' entraînement couché sous châssis, se situe en-dessous du poste de conduite (20), entre deux ensembles formant essieu (14, 16).

4. Ensemble formant tracteur selon l'une des revendications 1 à 3, caractérisé en ce qu'est prévu, vu dans le sens de la marche, derrière le poste de conduite (20), au moins un dispositif de montage (26) destiné aux appareils de travail (66).

5. Ensemble formant tracteur selon l'une des revendications 1 à 4, caractérisé en ce que le vérin (40) est un vérin hydraulique (40).

6. Ensemble formant tracteur selon l'une des revendications 1 à 5, caractérisé en ce que le vérin (40) peut être commandé manuellement à partir du poste de conduite (20).

7. Ensemble formant tracteur selon l'une des revendications 1 à 6, caractérisé en ce que le vérin (40) est susceptible d'être réglé, en fonction de la charge effective de chaque ensemble formant essieu (14, 16), pour obtenir une répartition souhaitée de la charge sur les ensembles formant essieux (14, 16).

8. Ensemble formant tracteur selon l'une des revendications 1 à 7, caractérisé en ce que le vérin (40) est susceptible d'être réglé, en fonction d'un éventuel glissement au niveau des roues des ensembles formant essieux (14, 16), pour obtenir une suppression du glissement ou une répartition souhaitée du glissement.

9. Ensemble formant tracteur selon l'une des revendications 1 à 8, caractérisé en ce que la glissière (28) se compose de deux rails en U (34) disposés en parallèle, vu dans le sens de la marche, dont les côtés ouverts sont orientés l'un vers l'autre, et en ce que des galets de guidage (38) sont prévus sur le contrepoids (30) et/ou sur l'appareil auxiliaire (62, 70), qui sont destinés à s'engager dans les rails en U (34).

10. Ensemble formant tracteur selon la revendication 9, caractérisé en ce que, pour chaque rail en U (34), respectivement au moins trois galets de guidage (38), situés à distance dans le sens de la marche, sont prévus sur le contrepoids (30) et/ou sur l'appareil auxiliaire (62, 70), de telle sorte que le contrepoids (30) et/ou l'appareil auxiliaire (62, 70) peut être dégagé, par les galets de guidage (38) situés le plus en avant, hors de la glissière (28) du tracteur (10), sans que le contrepoids (30) et/ou l'appareil auxiliaire (62, 70) quitte sa position stable dans la glissière.

11. Ensemble formant tracteur selon l'une des revendications 9 à 10, caractérisé en ce que le vérin (40) est disposé, à la hauteur des rails en U (34), entre ceux-ci.

12. Ensemble formant tracteur selon l'une des revendications 1 à 11, caractérisé en ce que le vérin (40), par une extrémité située en arrière dans le sens de la marche, est accouplé sur le châssis (en 42) et, par une extrémité située en avant dans le sens de la marche, sur le contrepoids et/ou sur l'appareil auxiliaire (62, 70), en particulier sur son extrémité avant.

13. Ensemble formant tracteur selon l'une des revendications 1 à 12, caractérisé en ce que le vérin (40) peut être désaccouplé du contrepoids (30) et/ou de l'appareil auxiliaire (62, 70), pour le fonctionnement, et en ce qu'un support est prévu pour le vérin (40), qui maintient le vérin (40), à l'état désaccouplé, dans une position prête à l'accouplement.

14. Ensemble formant tracteur selon l'une des revendications 1 à 13, caractérisé en ce que l'ensemble constituant la place du conducteur (20) peut pivoter de 180° autour d'un axe vertical.

15. Ensemble formant tracteur, comprenant, en outre, un dispositif de dépose pour le contrepoids et/ou un appareil auxiliaire, selon l'une des revendications 1 à 14, caractérisé par un support (61) et un guidage récepteur (64) adapté à la glissière (28) du tracteur (10), qui peut être amené en alignement avec la glissière (28) du tracteur et qui, une fois réalisé l'alignement, permet un transfert du contrepoids (30) et/ou de l'appareil auxiliaire (62, 70) du tracteur (10) vers le dispositif de dépose (60).

16. Ensemble formant tracteur selon la revendication 15, caractérisé en ce que le dispositif de dépose (60) peut être chargé par ses deux extrémités.
